# EUROPEAN PATENT APPLICATION

(11) **EP 1 686 519 A1**
(43) Date of publication of application: **02.08.2006**
(21) Application number: 04818974.0
(22) Date of filing: 19.11.2004
(51) Int. Cl.: G06Q 10/00

(54) **LICENSE ACQUIRING SYSTEM, SERVER APPARATUS AND TERMINAL APPARATUS**

(30) Priority: 21.11.2003 JP 2003391776; 19.11.2004 JP 2004335229
(71) Applicant: MATSUSHITA ELECTRIC INDUSTRIAL CO., LTD., Kadoma-shi, Osaka 571-8501 (JP)
(72) Inventor: TAKAHASHI, Eiji Mats. Elec. Ind. Co., Ltd., IPROC,, Chuo-ku, Osaka-shi, Osaka 540-6319 (JP)
(74) Representative: Grünecker, Kinkeldey, Stockmair & Schwanhäusser Anwaltssozietät
(86) International application number: PCT/JP2004/017248
(87) International publication number: WO 2005/050509

(57) **Abstract**

To provide a license acquisition system wherein a user can easily obtain a desired license, and a server and a terminal apparatus therefor. A terminal apparatus 3 obtains contents from a contents server 1 through a communication line 4, and also obtains, from a license server 2, a license that permits the user of obtained contents. To obtain the license, the terminal apparatus 3 transmits terminal state information indicating a terminal state related to a license and contents. When there are a plurality of types of licenses corresponding to contents, the license server 2 employs the terminal state information to designate priority levels for licenses in order that it is predicted that the user will obtain, prepares a license list based on the priority levels, and transmits the license list.

## Description

### Technical Field

The present invention relates to a license acquisition system for obtaining a license for using contents, and a server and a terminal apparatus therefor.

### Background Art

Recently, contents distribution services that distribute contents, such as music, images and games, through the Internet have widely spread, and some of the contents distribution services employ a system that permits a user who holds a license received by the payment of a service fee to use the contents.

According to a conventional consent agreement method for the contents distribution service, a contents provider provides, to a user, a selectable use condition and a fee consonant with the pertinent use condition. When the user determines the use condition, the contents provider transmits encrypted contents data together with the information for the use condition. A fee charging center transmits a decryption key to the information reception apparatus of the user in order to decrypt the contents data, so that the user can employ the contents data, and pays the fee charge center for the use fee (see, for example, patent document 1).

For such a system for providing a license, since a plurality of licenses corresponding to various use conditions can be selected for one type of contents, the services provided for users are improved.

However, as a problem, when the types of licenses corresponding to one type of contents are increased, the process for searching for a desired license is complicated, and accordingly, the acquisition of the license is difficult.
Patent Document 1: JP-A-2000-155734

### Disclosure of the Invention

### Problems that the Invention is to Solve

While taking the above described conventional problems into account, the objective of the present invention is to provide a license acquisition system that enables a user to easily obtain a desired license, and a server and a terminal apparatus therefor.

### Means for Solving the Problems

A license acquisition system according to the present invention for obtaining a license that permits the use of contents comprises:
a terminal apparatus that obtains the contents; and
a server connected to the terminal apparatus through a communication line to provide, for the terminal apparatus, a license that permits the use of the contents,
wherein the terminal apparatus includes:
   a storage unit that stores terminal apparatus information indicating a terminal state related to the contents and the license; and
   a communication unit that transmits the terminal state information when an acquisition request is performed to obtain a license that corresponds to the contents, and
wherein the server includes:
   a receiving unit that receives the license acquisition request and the terminal state information;
   a license information preparation unit that designates priority levels to a plurality of licenses based on the terminal state information in a case that the plurality of licenses corresponding to the contents are exist, and prepares license information indicating a correlation between the plurality of licenses and the designated priority levels; and
   a transmission unit that transmits the license information to the terminal apparatus.

With this arrangement, the user can easily obtain a desired license.

Further, the license information preparation unit prepares a license list in which the designated licenses are arranged in order of high priority levels.

With this arrangement, since the licenses are displayed beginning with high priority levels, the user can easily find a desired license.

Furthermore, the license information preparation unit prepares a license list in which only the licenses designated with the high priority levels are arranged.

With this arrangement, since only the licenses designated with the high priority levels are displayed, the user can easily find a desired license.

In addition, the license information preparation unit prepares license information that includes only the license designated with the highest priority levels.

With this arrangement, since only the license with the highest priority level is displayed, the license acquisition operation for the user can be simplified.

A license acquisition system according to the present invention for obtaining a license that permits the use of contents comprises:
a terminal apparatus that obtains the contents; and
a server connected to the terminal apparatus through a communication line to provide, for the terminal apparatus, a license that permits the use of the contents,
wherein the terminal apparatus includes:
   a storage unit that stores the contents, acquisition request destination information that indicates acquisition request destinations that correspond to a plurality of groups of the licenses in a case that the plurality of licenses corresponding to the contents are exist, and terminal state information that indicates a terminal state related to the contents and the licenses,
   a controller that selects a license acquisition request destination based on the terminal state information when a license acquisition request is performed to obtain a license that corresponds to the contents, and
   a transmitter that transmits a license acquisition request to the selected license acquisition request destination, and
wherein the server includes:
   a receiver that receives the acquisition request;
   a storage unit that stores the licenses in correlation with the acquisition request destinations, and
   a transmitter that transmits, to the terminal apparatus, the license that is correlated with the acquisition request destination designated in the license acquisition request.

With this arrangement, the user can easily obtain a desired license.

Further, the server transmits a list of a plurality of licenses in a case that the plurality of licenses corresponded to the acquisition request destination are exist,.

A license acquisition system according to the present invention for obtaining a license that permits the use of contents comprises:
a terminal apparatus that obtains the contents; and
a server connected to the terminal apparatus through a communication line to provide, for the terminal apparatus, a license that permits the use of the contents,
wherein the server includes:
   a receiver that receives, from the terminal apparatus, a license acquisition request for requesting acquisition of a license corresponding to the contents; and
   a transmitter that transmits a license list including a plurality of licenses in a case that the plurality of license corresponding to the contents are exist, and
wherein the terminal apparatus includes:
   a receiver that receives the license list information;
   a storage unit that stores the contents and terminal state information indicating a terminal state related to the contents and the licenses; and
   a controller that edits the license list to designate priority levels to the licenses on the license list by referring to the terminal state information.

With this arrangement, the user can easily obtain a desired license.

The terminal state information indicates whether the terminal apparatus holds a license corresponding to the contents.

With this arrangement, the priority level of the license can be designated based on the presence/absence of the license.

Further, the terminal state information indicates the consumption state of the license.

With this arrangement, the priority level of the license can be designated based on the consumption state of the license.

Furthermore, the terminal state information indicates a period for the use of the contents.

With this arrangement, the priority level of the license can be designated based on the period for the use of the license.

In addition, the terminal state information indicates a method of using the contents in the terminal apparatus.

With this arrangement, the priority level of the license can be designated based on how the contents are used.

Moreover, the terminal state information indicates a time when the terminal apparatus obtained the contents.

With this arrangement, the priority level of the contents can be designated based on the period where the contents were obtained, e.g., based on whether the contents were just obtained.

A server according to the present invention, which provides a license that permits the use of contents obtained by a terminal apparatus, comprises:
a receiver that receives, from the terminal apparatus, a license acquisition request for requesting acquisition of a license corresponding to the contents, and terminal state information that indicates a terminal state related to the contents and the license;
a license information preparation unit that designates priority levels to a plurality of licenses based on the terminal state information in a case that the plurality of licenses corresponding to the contents are exist, and prepares license information indicating a correlation between the plurality of licenses and the designated priority levels; and
a transmitter that transmits the license information to the terminal apparatus.

With this arrangement, since the server can provide the license information in accordance with the priority level, the user can easily obtain a desired license.

A terminal apparatus according to the present invention comprises:
a storage unit that stores obtained contents, acquisition request destination information that indicates acquisition request destinations that correspond to a plurality of groups of the licenses in a case that the plurality of licenses corresponding to the contents are exist, and terminal state information that indicates a terminal state related to the contents and the licenses;
a controller that selects a license acquisition request destination based on the terminal state information when a license acquisition request is performed to obtain a license that corresponds to the contents; and
a transmitter that transmits a license acquisition request to the selected license acquisition request destination.

With this arrangement, since the terminal apparatus can be used to select the license, the user can easily obtain a desired license.

A terminal apparatus according to the present invention comprises:
a storage unit that stores obtained contents and terminal state information indicating a terminal state related to the contents and a license;
a receiver that receives list information for licenses corresponding to the contents; and
a controller that edits the license list to designate priority levels to the licenses included in the list information by referring to the terminal state information.

With this arrangement, since the terminal apparatus can be used to provide the license information in accordance with the priority level, the user can easily obtain a desired license.

### Advantage of the Invention

According to the present invention, a license acquisition system wherein a user can easily obtain a desired license, and a server and a terminal therefor can be provided.

### Brief Description of the Drawings

[Fig. 1] A schematic block diagram showing the configuration of a license acquisition system for explaining a first embodiment of the present invention.
[Fig. 2] A schematic block diagram showing the configuration of a license server according to the first embodiment of the present invention.
[Fig. 3] A schematic block diagram showing a terminal apparatus according to the first embodiment of the present invention.
[Fig. 4] A diagram showing example information included in contents.
[Fig. 5] A diagram showing example information included in a license.
[Fig. 6] A sequence diagram showing a license acquisition method for explaining the first embodiment of the present invention.
[Fig. 7] A diagram showing an example license list displayed when a terminal apparatus does not have a license.
[Fig. 8] A diagram showing an example license list displayed when the license for the terminal apparatus has expired.
[Fig. 9] A sequence diagram showing a license acquisition method for explaining a second embodiment of the present invention.
[Fig. 10] A diagram showing information included in contents according to the second embodiment.
[Fig. 11] A sequence diagram showing a license acquisition method for explaining a third embodiment of the present invention.

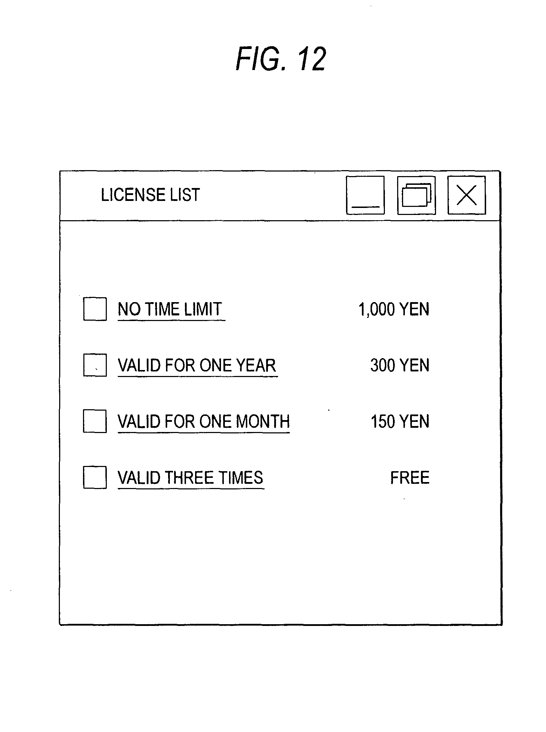

[Fig. 12] A diagram showing an example license list displayed according to the third embodiment.
[Fig. 13] A schematic block diagram showing the configuration of a license acquisition system for explaining a fourth embodiment of the present invention.
[Fig. 14] A diagram showing an example license list displayed when a terminal apparatus has a license.

### Description of Reference Numerals

- 1:: contents server
- 2:: license server
- 3:: terminal apparatus
- 4:: communication network
- 21:: license information preparation unit
- 22:: charge processor
- 23:: storage unit
- 24:: communication unit
- 25:: controller
- 31:: transmitter/receiver
- 32:: controller
- 33:: storage unit
- 34:: input unit
- 35:: display unit

### Best Modes for Carrying Out the Invention

### (First embodiment)

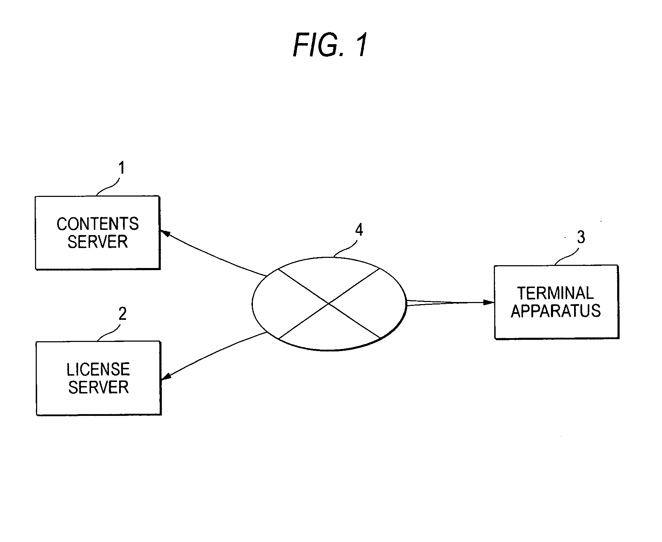

Fig. 1 is a schematic block diagram showing the configuration of a license acquisition system for explaining a first embodiment according to the present invention. As is shown in Fig. 1, the license acquisition system according to the first embodiment includes a contents server 1, a license server 2 and a terminal apparatus 3. The terminal apparatus 3 can exchange information with the contents server 1 and the license server 2 through a wired or wireless communication line 4.

The contents server 1 is an apparatus that distributes contents to the terminal apparatus 3. Here, the contents include, for example, electronic character, audio image and map data, data for games, software, and combinations of them.

The license server 2 is an apparatus that provides, for the terminal apparatus 3, a license that permits a user of the contents to receive a service.

Here, the license is information indicating some type of permission, and includes information for permitting rendering, download, or storage of the contents, or information, like an electronic ticket, for admitting the entrance of a specified place, or like an electronic coupon, for permitting the purchase of a product or a service at a discounted price. The license also includes the permission of printing and displaying of the contents.

The license may also include constraint information related to, for example, the use of the contents and the use of the license. The constraint information is information for conditions, such as the number of times of the use, the period of the use, the available time zone for the use, a user, a device to be employed or the location for the use, and a network. The terminal apparatus 3 can obtain only a license separately when it obtains the contents.

Further, a plurality of licenses that include different constraint information can be designated for the same contents. In this case, since constraint information differs, the prices of the licenses may vary. For example, a license that can be used three times is free, while a license that can be used for one month costs one hundred yen, and a license with no constraint (permanent license) costs one thousand yen. The constraint information and the prices can be arbitrarily set for the individual licenses.

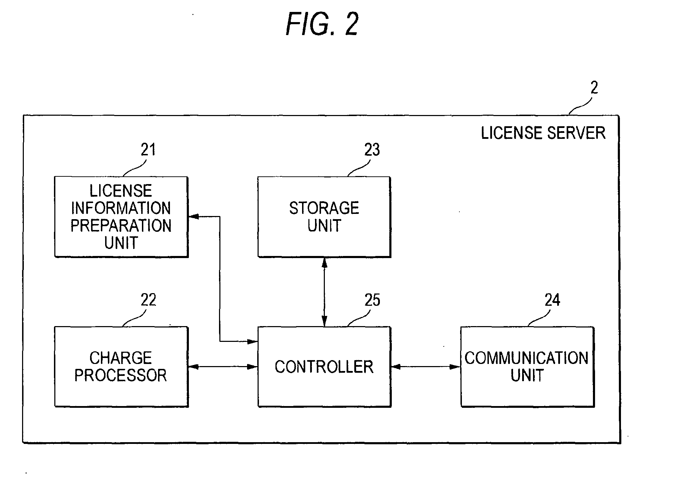

Fig. 2 is a schematic block diagram showing the configuration of the license server according to the first embodiment of the present invention. As is shown in Fig. 2, the license server 2 includes: a license information preparation unit 21, a charge processor 22, a storage unit 23, a communication unit 24 and a controller 25.

The license information preparation unit 21 prepares license information based on the terminal state information received from the terminal apparatus 3. The charge processor 22 employs the fee of the selected license to confirm the user and charge the fee. The storage unit 23 stores a license correlated with the contents. The communication unit 24 exchanges information with the terminal apparatus 3. The controller 25 controls the operation of the license server 2, and is constituted mainly by a processor that is operated in accordance with a predetermined program.

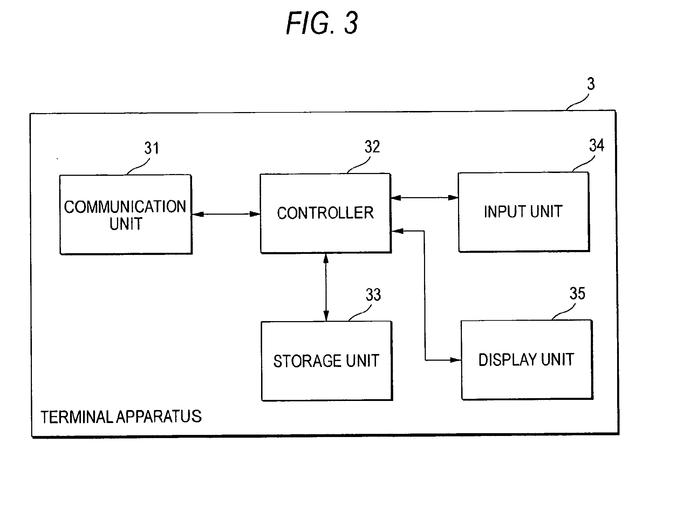

Fig. 3 is a schematic block diagram showing the configuration of the terminal apparatus according to the first embodiment of the present invention. As is shown in Fig. 3, the terminal apparatus 3 includes: a transmitter/receiver 31, a controller 32, a storage unit 33, an input unit 34 and a display unit 35.

The transmitter/receiver 31 exchanges information with the contents server 1 and the license server 2. The controller 32 controls the operation of the terminal apparatus 3, and is constituted mainly by a processor that is operated in accordance with a predetermined program. The storage unit 33 stores, for example, contents, licenses and terminal state information.

The input unit 34 receives an instruction for selecting contents and a license and an instruction for an acquisition request for the contents and the license thus selected. The display unit 35 displays image information for the contents, and when there are a plurality of licenses that correspond to one type of contents, also displays a license list that is a synoptic table of these licenses.

In this case, the terminal state information is information indicating the state of the terminal apparatus 3, such as the presence/absence of the license held by the terminal (e.g., a license ID held), the consumption state of the license held by the terminal (e.g., how much the license has been used, the remaining number of times for the use, or the remaining period for the use), information as to whether the terminal has just used the contents, how the terminal processed the contents (e.g., image information was designated as wall paper), or information as to whether the terminal has just obtained the contents (the contents have not yet been used).

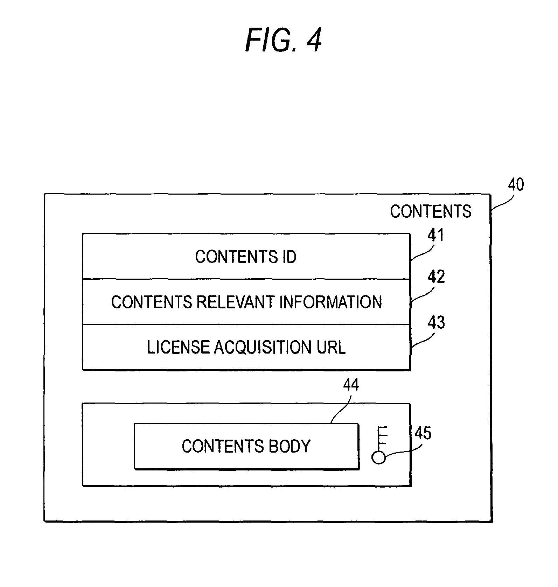

Fig. 4 is a diagram showing example information included in contents. As is shown in Fig. 4, contents 40 includes a contents ID 41, contents relevant information 42, a license acquisition URL (Uniform Resource Locator) 43 that is license acquisition destination information and a contents body 44.

The contents ID 41 is used to identify contents, and different IDs are allocated for individual contents. The contents relevant information 42 is relevant to contents, and is, for example, the name of contents and other information associated with contents, such as the name of a performer. The license acquisition URL 43 represents an access destination to obtain the license of the contents 40. Licenses corresponding to places represented by the license acquisition URLs are stored in the storage unit 23 of the license servers 2.

The contents body 44 is encrypted, as needed, by using an encryption key 45. When a user obtains the contents 40 with the contents body 44 being encrypted, the user can not use the contents until the terminal apparatus 3 obtains a license.

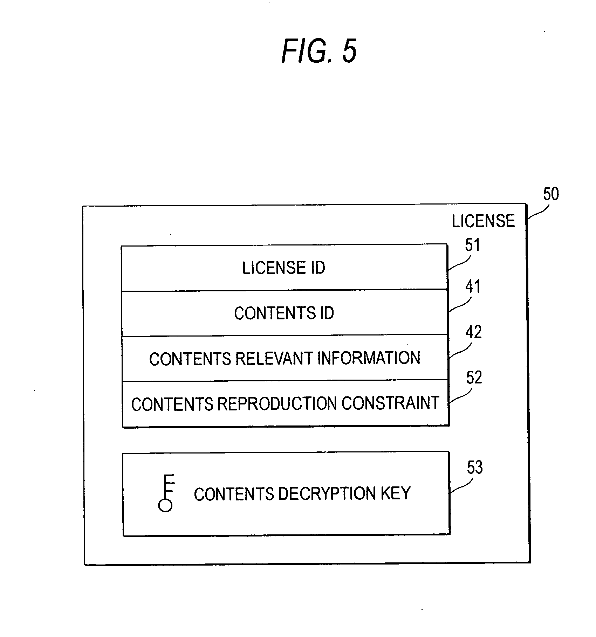

Fig. 5 is a diagram showing example information included in a license. As is shown in Fig. 5, a license 50 includes a license ID 51, a contents ID 41, contents relevant information 42, contents reproduction use constraint information 52 and a contents decryption key 53.

The license ID 51 is used to identify each license. The contents ID 41 and the contents relevant information 42 are the same as the information included in the contents 40, and the contents ID 41 and the license ID 51 are correlated with each other. The contents use constraint information 52 is information that regulates the number of times for the use of contents and a period for the use. The contents decryption key 53 is used to decrypt the encrypted contents body 44.

By obtaining the license 50, the contents user can decrypt the encrypted contents body 44, and use the contents body 44. It should be noted that the user can obtain the contents data 40 and the license data 50 at different times. The time for obtaining the license data 50 is, for example, when the contents data 40 are obtained, when the license is fully used (the remaining number of times for the use is 0, or the period for the use has expired), or when the user requests the acquisition of the license, regardless of the presence/absence of the license or the state of the license.

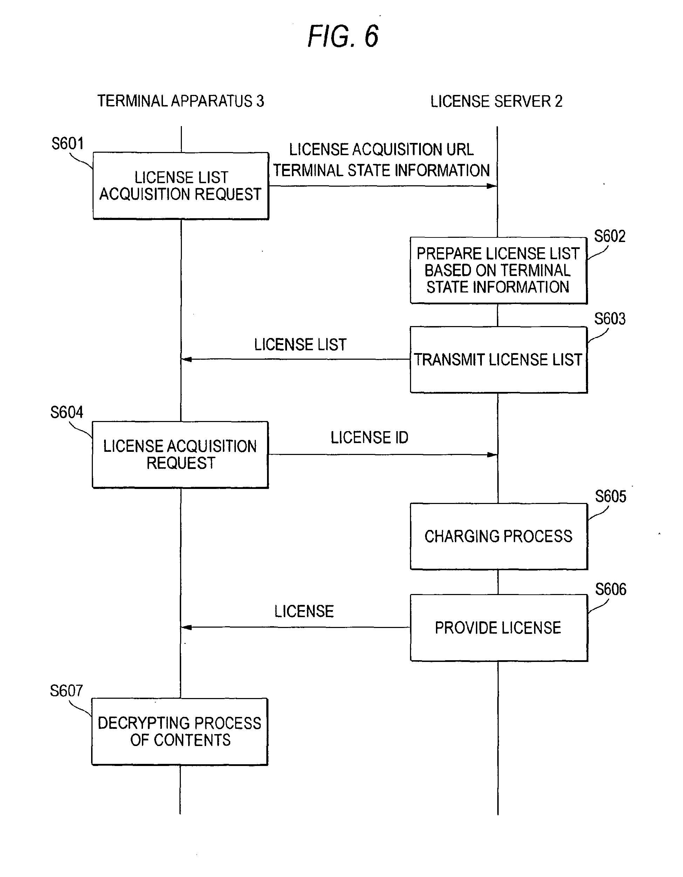

Fig. 6 is a sequence diagram showing a license acquisition method for explaining the first embodiment of the present invention. The terminal apparatus 3 accesses the license acquisition URL, and issues a license list acquisition request. At this time, the terminal apparatus 3 transmits, to the license server 2, terminal state information stored in the storage unit 33 (S601).

In the license server 2, the license information preparation unit 21 prepare a license list based on the terminal state information transmitted from the terminal apparatus 3 (S602). At this time, when there are a plurality of types of licenses corresponding to contents, the controller of the license server 2 designates priority levels to the licenses in the order that it is predicted that a user will obtain the licenses, and permits the license information preparation unit 21 to prepare a license list based on the priority levels. The communication unit 24 transmits the obtained license list to the terminal apparatus 3 (S603).

Upon receiving the license list at the terminal apparatus 3, the display unit 33 displays the license list. The user of the terminal apparatus 3 employs the input unit 34 to select, on the displayed license list, a license to be obtained, and issues a license acquisition request by, for example, notifying the license server 2 of the license ID 51 (S604).

When the selected license is a pay license, the charge processor 22 of the license server 2 charges the license user for the designated license (S605). After the charging process is completed, the license server 2 provides a license for the terminal apparatus 3 (S606). When the license is received, the terminal apparatus 3 decrypts the contents, so that the contents can be used (S607).

An explanation will now be given for an example wherein a free license for listening demonstration and a pay license (for the number of times and for a period) are present as license types.

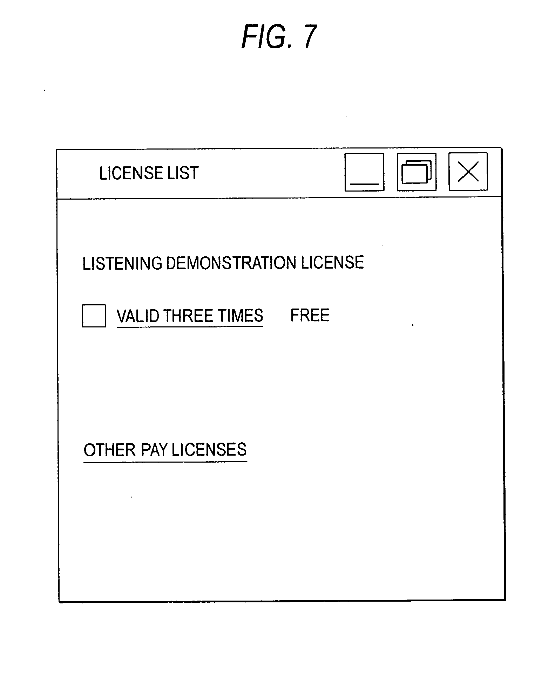

Fig. 7 is a diagram showing an example license list displayed when a terminal apparatus does not have a license. When the terminal apparatus 3 does not have the license for contents desired by a user, the terminal state information stored in the storage unit 33 indicates the absence of the license. When the user employs the input unit 34 to enter a request for using the contents, the controller 32 examines the terminal state information stored in the storage unit 33, and displays, on the display unit 35, a message that the license is not held by the terminal apparatus 3 and a message for supporting a license acquisition request.

When the user employs the input unit 34 to enter a license acquisition request instruction, at S601, the controller 32 accesses the license acquisition URL included in the contents, and transmits, through the communication unit 31 to the license server 2, a license acquisition request and also the terminal state information that is stored in the storage unit 33 and that indicates the absence of the license.

Since the received terminal state information indicates the absence of the license, the controller 25 of the license server 2 assumes that the user will probably request a free license as a first license. The controller 25 allocates high priority levels to free licenses, and low priority levels to pay licenses, and the license information preparation unit 21 prepares a license list based on the designated priority levels.

As the license list thus prepared by the license information preparation unit 21, as is shown in Fig. 7, information for listening demonstration licenses having high priority levels is displayed on the first page, and pay licenses are displayed on the other pages.

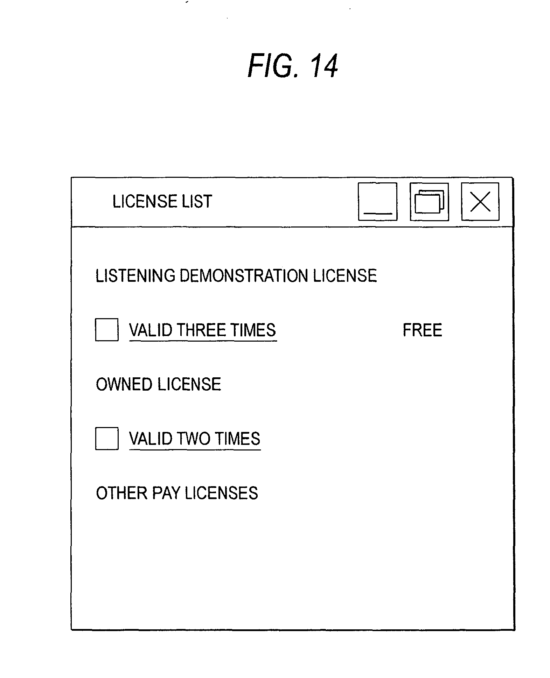

Fig. 14 is a diagram showing an example license list displayed when the terminal apparatus has a license. As is shown in Fig. 14, the license server 2 prepares a license list by adding information for the license currently held by the terminal apparatus 3 (the remaining number of times for the use in the example in Fig. 14) to information of a license having a high priority level (free license in the example in Fig. 14).

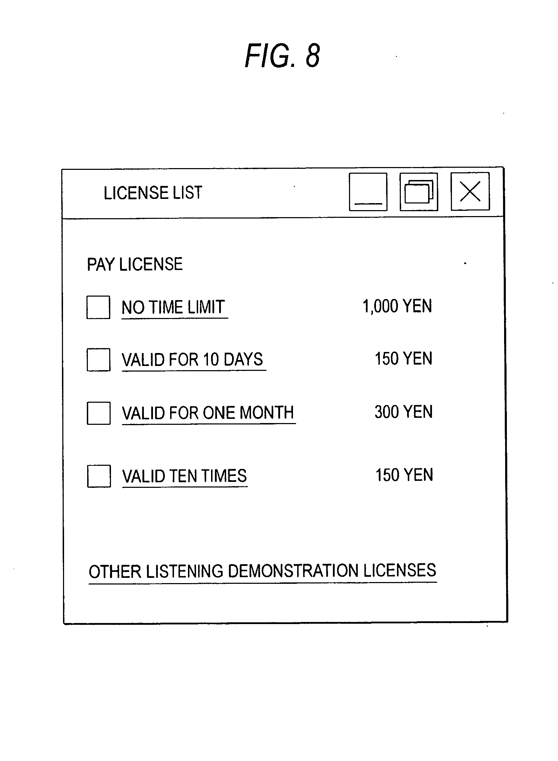

Fig. 8 is a diagram showing an example license list displayed when the terminal apparatus has used a license. When the license has been used, e.g., when, as the state of the terminal apparatus 3, the number of times for the use is "0" or the period for the use has expired for a license subject under restrictions, the terminal state information indicating the expired license is held is stored in the storage unit 33.

When the license has expired and the user employs the input unit 34 to enter a request for using the pertinent contents, the controller 32 examines the terminal state information stored in the storage unit 33, and displays, on the display unit 35, a message representing that the terminal apparatus 3 has completely used the license and a message for supporting a license acquisition request.

When the user employs the input unit 34 to enter a license acquisition request instruction, at S601, the controller 32 accesses the license acquisition URL included in the contents, and transmits, through the communication unit 31 to the license server 2, a license acquisition request and terminal state information indicating that the license stored in the storage unit 33 has expired.

Since the received terminal state information indicates that the license has consumed, the controller 25 of the license server 2 assumes that the user will probably ask a pay license as a license to be obtained, and allocates high priority levels to pay licenses and low priority levels to free licenses. Based on the designated priority levels, the license information preparation unit 21 prepares a license list.

As the license list thus prepared by the license information preparation unit 21, as is shown in Fig. 8, information for pay licenses having high priority levels is displayed on the first page, and free licenses are displayed on the other pages.

When there are a plurality of pay licenses, the contents use frequency for the user is additionally included in the terminal state information, and the priority level is designated to licenses that it is predicted that the user will obtain, based on the terminal state information. For example, for the terminal apparatus 3 that frequently employs the contents, the priority level is increased for licenses beginning with a no-time-limit license, as the use frequency is increased.

For the priority level allocation, priority levels categorized for contents in advance may be stored in the storage unit 23 of the license server 2, and the controller may examine these priority levels when a license acquisition request is issued. Further, the received terminal state information and the license that the user selected in the corresponding terminal state may be stored in the storage unit 23, and the priority level may be designated based on the stored information.

As the license list preparation method by the license server 2, as is shown in Fig. 7 or 8, licenses having high priority levels may be placed close to the top of license list, only the licenses having high priority levels may be enumerated, or only one license having the highest priority level may be selected.

Furthermore, information about the license that is already held and is not yet completely used may be displayed together with the license list, or such a license may not be displayed. With this arrangement, it is possible to avoid the user from erroneously requesting again a license already held, and to prevent the acquisition of this license.

According to the license acquisition system of the first embodiment, since a high priority level can be designated and displayed for a license that it is predicted that a user will designate, the user can easily designate a desired license among a plurality of licenses.

For a terminal apparatus, such as a cellular phone, having a small display portion, since a small number of characters are displayed on the display portion at one time, an operation for searching for a desired license is especially difficult. However, according to the license acquisition system of this embodiment, a desired license can be easily obtained.

According to the explanation for this embodiment, the license server has prepared the license list and transmitted it to the terminal apparatus, and the terminal apparatus has displayed the license list on the display unit. However, the license server may only designate the priority levels, and transmit license information with the priority level being designated to the terminal apparatus, while the controller of the terminal apparatus may arbitrarily designate the display message based on the received license information.

According to this embodiment, the terminal state information is transmitted in association with the license list request at S601. However, at the time different from the time for the license list request, the license list request may be transmitted to the license server. Further, the transmission timing may be correlated with the contents of the terminal state information, and the license server may determine the contents of the terminal state information in accordance with the transmission timing. Furthermore, the timing for the license list request may be changed in accordance with the terminal state information, and the license server may determine the contents of the terminal state information in accordance with the transmission timing for the license list.

In this embodiment, the terminal state information is transmitted in associated with the license list request at S601. However, the protocol (e.g., the HTTP or the WSP) used for the license list request and the contents type (e.g., MIME Type) transmitted with the license list request may be correlated with the contents of the terminal state information, and the license server may determine the contents of the terminal state information in accordance with the protocol or the contents type of the license list request.

In this embodiment, the terminal state information is transmitted in association with the license list request at S601. However, an electronic signature may be added to the license list request and the terminal state information, and the license server may authorize the terminal and determine that the terminal state information is not altered. At this time, time information may be additionally included in the terminal state information to prevent the third party from illegally using the terminal state information with the electronic signature.

### (Second embodiment)

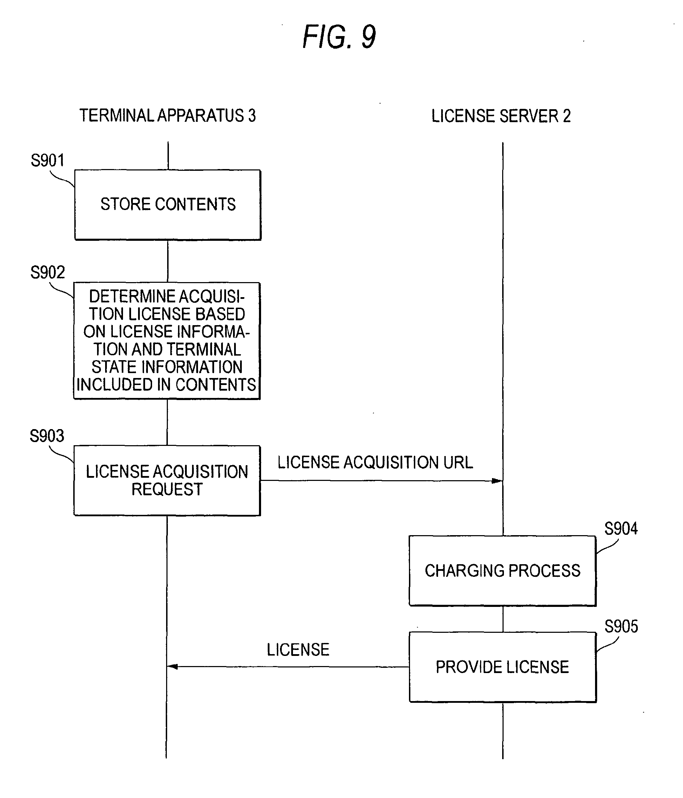

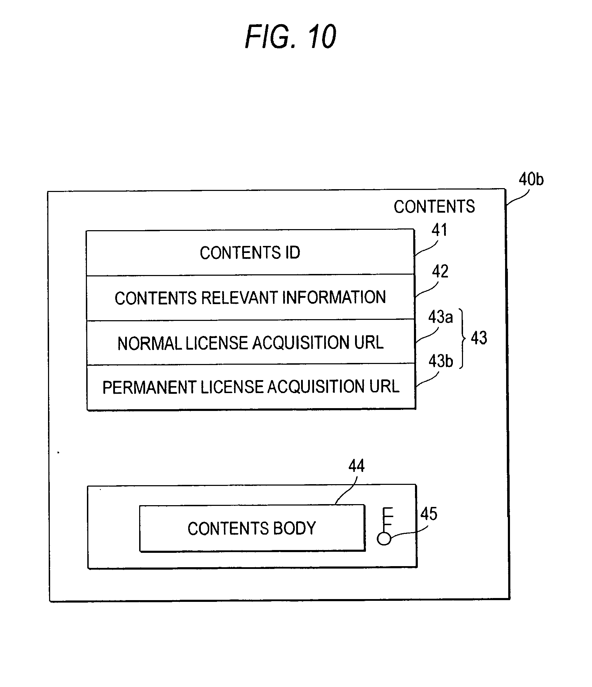

Fig. 9 is a sequence diagram showing a license acquisition method for explaining a second embodiment according to the present invention. Fig. 10 is a diagram showing information included in contents according to the second embodiment. In Figs. 9 and 10, the same reference numerals are provided for the same portions as those in Figs. 1 to 5 explained for the first embodiment.

As is shown in Fig. 9, when a terminal apparatus 3 obtains contents from a contents server 1, the terminal apparatus 3 stores contents 40b in a storage unit 33 (S901). At this time, as is shown in Fig. 10, the contents 40b transmitted from the contents server 1 includes, as two license acquisition URLs 43, a normal license acquisition URL 43a and a permanent license acquisition URL 43b.

The contents 40b may include license acquisition URL 43 for different licenses, or may include license acquisition URLs 43 for individual groups including a plurality of licenses.

When a license acquisition request is issued, a controller 32 employs terminal state information stored in the storage unit 33 to select the license acquisition URL 43 included in the contents 40b, and determines a license to be obtained (S902). For example, when a license for which a plurality of limited times for the use is provided has been completely used, the controller 32 predicts the acquisition of a permanent license at the next time, and selects and determines the permanent license acquisition URL. At this time, the controller may display, on a display unit 35, a confirmation message as to whether the determined license should be obtained.

When the available number of times for the use of contents is 0, or when the period for the use has expired, as the timing for a license acquisition request, the controller 32 may detect that the terminal apparatus 3 has used the contents and may automatically determine the license. Or, when a license acquisition request instruction is entered through the input unit 34, the controller 32 may determine the license.

When the terminal apparatus 3 has determined the license, the controller 32 transmits a license acquisition request to a license server 2 automatically or by the user's entry (S903). Upon receiving the license acquisition request at the license server 2, a charge processor 22 performs the charging process and a user confirmation process, and as needed, asks a confirmation process for the terminal apparatus 3 (S904). When the charging process is completed, the license server 2 provides a license for the terminal apparatus 3 (S905).

As the license determination method by the controller 32, for example, when there are data related to the license (e.g., the available number of times for the use and the available period for the use) together with the license acquisition URL for contents, the data are compared with the terminal state information, and a license that it is predicted that a user will request is determined.

According to the license acquisition system in the second embodiment, since the terminal apparatus employs the terminal state information to determine a license acquisition request destination, the user can easily obtain a desired license when there are a plurality of licenses. Further, since a function for providing a priority level need not be provided for the license server 2, a conventional license server 2 can also be employed.

### (Third embodiment)

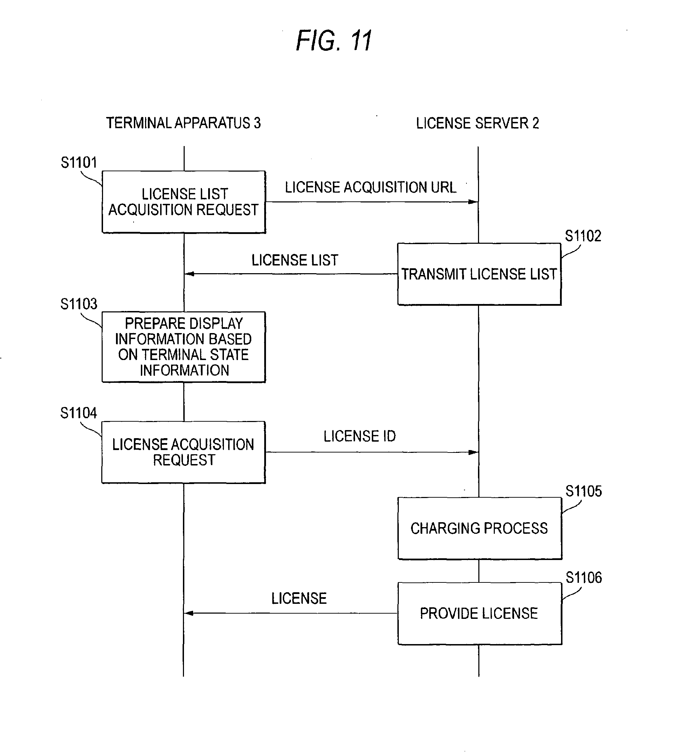

Fig. 11 is a sequence diagram showing a license acquisition method for explaining a third embodiment according to the present invention. In Fig. 11, the same reference numerals are provided for the same portions as those in Figs. 1 to 5 as explained for the first embodiment.

As is shown in Fig. 11, first, a terminal apparatus 3 accesses a license acquisition URL 43, and issues a license list acquisition request for a desired contents (S1101). When there are a plurality of licenses corresponding to the contents, a license server 2 transmits a license list (S1102).

Upon receiving the license list from the license server 2, a controller 32 of the terminal apparatus 3 designates priority levels for the licenses based on terminal state information stored on a storage unit 33, employs the priority levels to edit the license list, prepares display information, and displays the display information on a display unit 35 (S1103).

The user selects a desired license among the licenses displayed on the display unit 35, and employs an input unit 34 to enter a license acquisition request instruction. The controller 32 transmits, to the license server 2, a license ID corresponding to the selected license, and issues a license acquisition request (S1104). Then, upon receiving the license acquisition request, the license server 2 performs the charging process as needed (S1105), and provides a license for the terminal apparatus 3 (S1106).

When, for example, a plurality of licenses for specific contents are held, and when a list of licenses corresponding to the contents is received from the license server 2, the controller 32 of the terminal apparatus 3 examines the terminal state information, and prepares and displays display information with priority to licenses that are not yet held.

According to the license acquisition system for the third embodiment, since the terminal apparatus 3 prepares the license list based on the terminal state information, the user can easily obtain a desired license even when a plurality of licenses are present. Furthermore, since a function for designating priority levels need not be provided for the license server 2, a conventional license server 2 can also be employed.

### (Fourth embodiment)

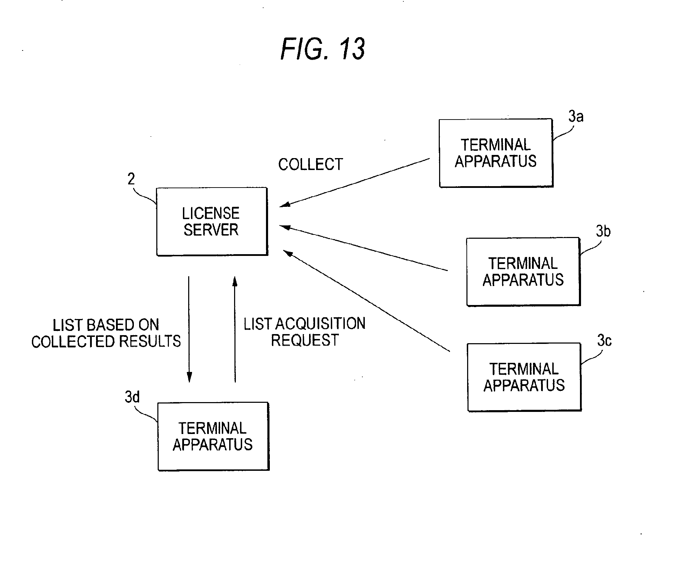

Fig. 13 is a schematic block diagram showing the configuration of a license acquisition system for explaining a fourth embodiment according to the present invention. As is shown in Fig. 13, a license server according to this embodiment collects terminal state information obtained by a plurality of terminal apparatuses 3a to 3c and right acquisition situations of the terminal apparatuses 3a to 3c. When a license list acquisition request is received from a terminal apparatus 3d, a license list is prepared based on the collected results, and is provided for the terminal apparatus 3d.

For example, the types of right information obtained by the multiple terminal apparatuses 3 for the same contents are collected for the individual frequencies to prepare a license list, or screen information for the license list based on the collected results is added and provided for the terminal apparatus 3.

For contents like hit songs and new current songs, no-time-limit licenses or licenses providing many times for the use or a long period for the use tend to be selected. In this case, the license server 2 prepares a license list where no-time-limit licenses and licenses providing many times for the use or a long period for the use are arranged preferentially.

Further, since contents like songs used for, for example, commercials, are released only partially, there are many demands on listening to a full song for the time being, so that listening demonstration licenses or licenses providing a few times for the use or a short period for the use tend to be selected. In this case, the license server 2 prepares a license list wherein listening demonstration licenses and licenses providing a few times for the use or a short period for the use are preferentially arranged.

A specific operation of the license server 2 of this embodiment will now be described. The license server in this embodiment has the configuration shown in Fig. 2. The storage unit 23 stores the types of right information obtained by the terminal apparatus 3 in consonance with individual contents. When the controller 25 receives a license list acquisition request from the terminal apparatus 3 through the communication unit 24, the controller 25 reads, from the storage unit 23, the collected results related to contents for the requested license, and instructs the license information preparation unit 21 to prepare a license list, in accordance with the collected results, wherein, for example, right information obtained for the contents are arranged preferentially. The license information prepared by the license information preparation unit 21 is transmitted to the terminal apparatus 3 through the communication unit 24.

Instead of collecting the types of right information for the individual contents, the licenses server 2 may collect right information obtained for the individual categories if a plurality of types of contents can be categorized.

According to the license acquisition system for the fourth embodiment of the present invention, since the license list is provided based on the terminal state information obtained by a plurality of terminal apparatuses, licenses that it is predicted that a user will request can be presented preferentially.

### (Fifth embodiment)

A license acquisition system according to a fifth embodiment of the present invention will now be described. In this embodiment, when a specified keyword is included in contents relevant information, a terminal apparatus 3 preferentially displays a predetermined license with priority.

When the user of the terminal apparatus 3 obtains the license for the song of the user's favorite singer as contents, and when the use of the contents is the first time for the terminal apparatus 3, it is predicted that the user will probably select a no-time-limit license or a license providing many times for the use or a long period for the use, rather than a listening demonstration license.

Therefore, when contents relevant information includes a keyword registered in advance by the user or a keyword that is entered to the terminal apparatus and is frequently used, the terminal apparatus 3 prepares and displays a license list wherein a predetermined license (e.g., a no-time-limit license) is arranged preferentially, so that the license list consonant with the user's favorite can be provided.

A specific operation of the terminal apparatus 3 of this embodiment will now be explained. The terminal apparatus of this embodiment has the configuration shown in Fig. 3. A keyword registered in advance by the user of the terminal apparatus 3 or a keyword that is entered through the input unit 34 at a predetermined frequency are stored in the storage unit 33. The controller 32 determines whether the obtained contents relevant information includes the above described keyword stored in the storage unit 33.

Then, a license acquisition request is issued, and a license list is obtained from the license server 2. At this time, when the above keyword is included in the contents relevant information for contents to be employed, the controller 32 edits the obtained license list, as needed, and displays the license list on the display unit 35.

In this embodiment, the terminal apparatus 3 edits the license list. However, the terminal apparatus 3 may transmit the keyword stored in the storage unit 33 as terminal state information to the license server 2, and the license server 2 may prepare license list based on the keyword included in the terminal state information, and may provide the license list for the terminal apparatus 3.

According to the license acquisition system for the fifth embodiment of the invention, a license list consonant with, for example, the user's favorite can be provided.

In the explanation for the first to the fifth embodiments, the terminal apparatus 3 has obtained contents from the contents server 1. However, when the terminal apparatus 3 has an interface for an external medium, such as an SD (Secure Digital) card, contents may be obtained from an external medium. Furthermore, a license may also be obtained from an external medium.

The present invention has been described in detail by referring to the specified embodiments. However, it is obvious for one having ordinary skill in the art that these embodiments can be variously modified or corrected without departing from the spirit and the scope of the present invention.

The present invention is based on Japanese Patent Application No. 2003-391776, filed on November 21, 2003 and Japanese Patent Application No. 2004-335229, filed on November 19, 2004, and the contents of these applications are introduced into this invention as references.

### Industrial Applicability

The license acquisition system of the present invention provides effects such that the user can easily obtain a desired license, and is useful for a terminal apparatus, such as a cellular phone, and a server.

## Claims

1. A license acquisition system for obtaining a license that permits the use of contents, comprising:
a terminal apparatus that obtains the contents; and
a server connected to the terminal apparatus through a communication line to provide, for the terminal apparatus, a license that permits the use of the contents,
wherein the terminal apparatus includes:
a storage unit that stores terminal apparatus information indicating a terminal state related to the contents and the license; and
a communication unit that transmits the terminal state information when an acquisition request is performed to obtain a license that corresponds to the contents, and
wherein the server includes:
a receiving unit that receives the license acquisition request and the terminal state information;
a license information preparation unit that designates priority levels to a plurality of licenses based on the terminal state information in a case that the plurality of licenses corresponding to the contents are exist, and prepares license information indicating a correlation between the plurality of licenses and the designated priority levels; and
a transmission unit that transmits the license information to the terminal apparatus.

2. The license acquisition system according to claim 1, wherein the license information preparation unit prepares a license list in which the designated licenses are arranged in order of high priority levels.

3. The license acquisition system according to claim 1, wherein the license information preparation unit prepares a license list in which only the licenses designated with the high priority levels are arranged.

4. The license acquisition system according to claim 1, wherein the license information preparation unit prepares license information that includes only the license designated with the highest priority levels.

5. A license acquisition system for obtaining a license that permits the use of contents, comprising:
a terminal apparatus that obtains the contents; and
a server connected to the terminal apparatus through a communication line to provide, for the terminal apparatus, a license that permits the use of the contents,
wherein the terminal apparatus includes:
a storage unit that stores the contents, acquisition request destination information that indicates license acquisition request destinations that correspond to a plurality of groups of the licenses in a case that the plurality of licenses corresponding to the contents are exist, and terminal state information that indicates a terminal state related to the contents and the licenses,
a controller that selects at least one of the license acquisition request destinations based on the terminal state information when a license acquisition request is performed to obtain a license that corresponds to the contents, and
a transmitter that transmits a license acquisition request to the selected license acquisition request destination, and
wherein the server includes:
a receiver that receives the acquisition request;
a storage unit that stores the licenses in correlation with the acquisition request destinations, and
a transmitter that transmits, to the terminal apparatus, the license that is correlated with the acquisition request destination designated in the license acquisition request.

6. The license acquisition system according to claim 5, wherein the server transmits a list of a plurality of licenses in a case that the plurality of licenses corresponded to the acquisition request destination are exist.

7. A license acquisition system for obtaining a license that permits the use of contents, comprising:
a terminal apparatus that obtains the contents; and
a server connected to the terminal apparatus through a communication line to provide, for the terminal apparatus, a license that permits the use of the contents,
wherein the server includes:
a receiver that receives, from the terminal apparatus, a license acquisition request for requesting acquisition of a license corresponding to the contents; and
a transmitter that transmits a license list including a plurality of licenses in a case that the plurality of license corresponding to the contents are exist, and
wherein the terminal apparatus includes:
a receiver that receives the license list information;
a storage unit that stores the contents and terminal state information indicating a terminal state related to the contents and the licenses; and
a controller that edits the license list to designate priority levels to the licenses on the license list by referring to the terminal state information.

8. The license acquisition system according to one of claims 1 to 7, wherein the terminal state information indicates whether the terminal apparatus holds a license corresponding to the contents.

9. The license acquisition system according to one of claims 1 to 7, wherein the terminal state information indicates the consumption state of the license.

10. The license acquisition system according to one of claims 1 to 7, wherein the terminal state information indicates a period for the use of the contents.

11. The license acquisition system according to one of claims 1 to 7, wherein the terminal state information indicates a method of using the contents in the terminal apparatus.

12. The license acquisition system according to one of claims 1 to 7, wherein the terminal state information indicates a time when the terminal apparatus obtained the contents.

13. A server for providing a license that permits the use of contents obtained by a terminal apparatus, comprising:
a receiver that receives, from the terminal apparatus, a license acquisition request for requesting acquisition of a license corresponding to the contents, and terminal state information that indicates a terminal state related to the contents and the license;
a license information preparation unit that designates priority levels to a plurality of licenses based on the terminal state information in a case that the plurality of licenses corresponding to the contents are exist, and prepares license information indicating a correlation between the plurality of licenses and the designated priority levels; and
a transmitter that transmits the license information to the terminal apparatus.

14. A terminal apparatus, comprising:
a storage unit that stores obtained contents, acquisition request destination information that indicates acquisition request destinations that correspond to a plurality of groups of the licenses in a case that the plurality of licenses corresponding to the contents are exist, and terminal state information that indicates a terminal state related to the contents and the licenses;
a controller that selects a license acquisition request destination based on the terminal state information when a license acquisition request is performed to obtain a license that corresponds to the contents; and
a transmitter that transmits a license acquisition request to the selected license acquisition request destination.

15. A terminal apparatus, comprising:
a storage unit that stores obtained contents and terminal state information indicating a terminal state related to the contents and a license;
a receiver that receives list information for licenses corresponding to the contents; and
a controller that edits the license list to designate priority levels to the licenses included in the list information by referring to the terminal state information.
